Europäisches Patentamt

European Patent Office

Office européen des brevets

(19)

(11) Publication number: **0 168 959**
**B1**

(12) EUROPEAN PATENT SPECIFICATION

(45) Date of publication of patent specification: **17.08.88**

(51) Int. Cl.⁴: **B 63 G 8/42**, B 63 G 7/02

(21) Application number: **85304200.0**

(22) Date of filing: **13.06.85**

(54) Bi-planar pontoon paravane seismic source system.

(30) Priority: **19.06.84 US 622307**

(43) Date of publication of application:
**22.01.86 Bulletin 86/04**

(45) Publication of the grant of the patent:
**17.08.88 Bulletin 88/33**

(84) Designated Contracting States:
**DE FR GB**

(56) References cited:
FR-A-2 296 562
FR-A-2 496 277
GB-A- 919 666
US-A-2 960 960

(73) Proprietor: **TEXAS INSTRUMENTS
INCORPORATED**
**13500 North Central Expressway**
**Dallas Texas 75265 (US)**

(72) Inventor: **George, Robert K.**
**267 Northwood**
**Lewisville, TX 75067 (US)**
Inventor: **Trent, Lorton E.**
**417 Crestover**
**Richardson, TX 75080 (US)**
Inventor: **Harrison, Earnest R.**
**2401 Westridge**
**Plano, TX 75075 (US)**

(74) Representative: **Abbott, David John et al**
**Abel & Imray Northumberland House 303-306**
**High Holborn**
**London, WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Background of the invention
Field of the invention

This invention relates to paravanes for depth and directional positioning of towed seismic source arrays and particularly to a bi-planar pontoon paravane having a pair of wings for directing the flow of water to provide side forces.

Description of the prior art

In hydrographic seismic surveys over oceans, the state of the art is to tow seismic sources (airguns) outboard of the towing vessel. Some type of paravane is necessary to apply a force perpendicular to the direction of the vessel's travel and in a plane parallel with the surface of the ocean. This results in the air-gun source arrays being 50 meters to 100 or more meters wide behind the vessel. Configuring in two parallel lines enables graphing two seismic lines at the same pass by shooting guns alternately in their wide-spread configuration behind the vessel, thus cutting survey time and cost in half, and to allow for more than two strings to be towed behind the vessel. Also, by spacing a plurality of paravanes in a geometric pattern, side noise may be attenuated. To be effective for this use, the paravane must have some flotation to maintain the paravane at the surface or a specific depth below the surface.

Commercial fishermen and shrimp boat operators have used paravanes for years to pull their nets outboard of their boats. Their paravanes take the form of simple boards called doors, or otterboards, which have a chain or rope bridle. These types of paravanes are too small to pull the heavy pressure-vessel type of air guns used in the seismic industry and would not withstand the seismic pulses.

United States Navy mine sweeper vessels have employed more sophisticated paravanes with four "air foils" made of formed sheet metal with the sides joined into the classic "box plane". These paravanes provide enough pull for seismic work, but are unwieldy in requiring three separate components to be used: a 230 kg (500 pound) paravane, a 410 kg (900 pound) steel or fiber-glass float and the air-gun array itself, which weighs some 2300 kg (5,000 pounds). With this type of paravane, the air-gun arrays still have to be supported by round buoys that create a large drag force.

Another prior art paravane is a long, slender V shaped pontoon that serves as a paravane by its surface area and supports the array of air-guns as well.

Still another prior art paravane looks like a section of an airplane wing which is turned on its side. Lead is put in the bottom "tip" of the wing, and the top cavity serves as a buoyancy chamber to maintain the sideways orientation of the paravane. This type paravane tends to speed up, slow down, and jump out of the water at times due to nearly neutral buoyancy.

Still another prior art device is a cylindrical steel pontoon having a steerable wing on the front which steers the pontoon outboard of the chip. This particular prior art device is very large and in fact too large for use on the typical seismic exploration vessel.

To reduce the length of the paravane and then provide a steady, predictable side force, the biplane structure of Applicant has been invented.

Brief summary of the invention

According to the present invention there is provided a bi-planar pontoon paravane for towing by a marine vessel and for controlling the depth and position of other towed devices relative to the vessel, comprising:

a buoyant bridge having two long sides;

a right wing attached lengthwise of the paravane to one long side of the bridge, projected downwardly from the bridge into the water for providing side force; and

a left wing attached lengthwise of the paravane to the other long side of the bridge, parallel to the right wing, projected downwardly from the bridge into the water for providing side force in concert with the right wing.

A bi-planar pontoon paravane according to an example of this invention is formed of a rectangular shell filled with polyurethane foam to form a buoyant bridge structure. A wing is attached to each side of the bridge. The wings project into the water and direct the water flow to provide a side force. The side force enables pulling a seismic source array to the side, or outboard, of a towing vessel. An adjustable bridle is attached to the bi-planar pontoon paravane and a tow line is attached to the bridle. The bridle may be remotely adjusted through a motor and gearing arrangement on the paravane, controlled by a valve on the towing vessel, or it may be manually adjusted before being developed. Adjusting the bridle results in an adjustment of the angle of attack of the paravane. The angle of attack determines the position of the paravane relative to the towing vessel. A nose plane is positioned in the front of the paravane, below the bridge and between the wings. It is angled with the horizontal to prevent the paravane from diving.

The paravane is moved in and out of the water using a boom aboard the towing vessel. The boom is attached to a pair of cables which in turn are attached to the seismic source array. The cables pass through apertures in the bridge and are locked by a ring mechanism when the seismic source array is at a desired depth from the paravane. The boom is then disconnected and the tow line attached. For removing the system, the boom is reattached to the pair of lines, the seismic source array is pulled upwardly until it nests in a housing formed by the two wings and the bridge. As the boom continues to pull upwardly, the paravane is carried up along with the seismic source array.

The principal object of this invention is to provide a paravane that provides adequate side force and is of a minimum length for ease of storage aboard the towing vessel.

Another object of this invention is to provide a paravane in which the towed seismic source array may be housed and lifted out of the water together with the seismic source array.

Still another object of this invention is to provide a paravane whose angle of attack may be remotely controlled.

These and other objects will be made evident in the detailed description that follows.

Brief description of the drawings

Figure 1 is a perspective view of the bi-planar pontoon paravane supporting a seismic source array.

Figure 2 is a section taken of the paravane as indicated in Figure 1.

Figure 3 is a side view of a portion of Figure 2.

Figure 4 is a partially phantom perspective view illustrating the bridle adjustment mechanism.

Figure 5 is a perspective of the towing vessel towing six of the bi-planar pontoon paravanes of this invention, together with a seismic streamer.

Detailed description of the invention

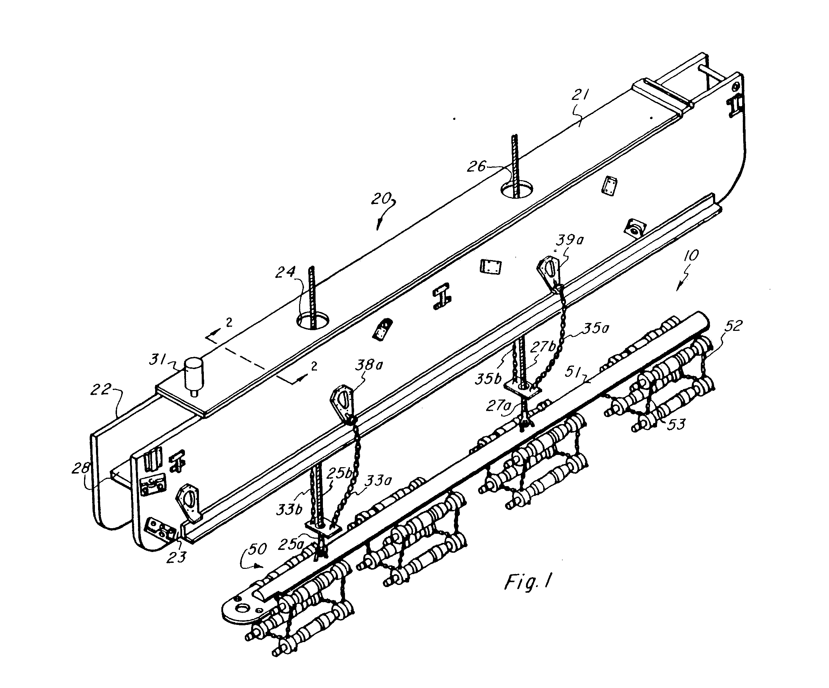

Figure 1 illustrates the seismic source system 10 which is comprised generally of bi-planar pontoon paravane 20 and seismic source assembly 50. Seismic source assembly 50 is suspended from paravane 20 by cables 25a and 27a.

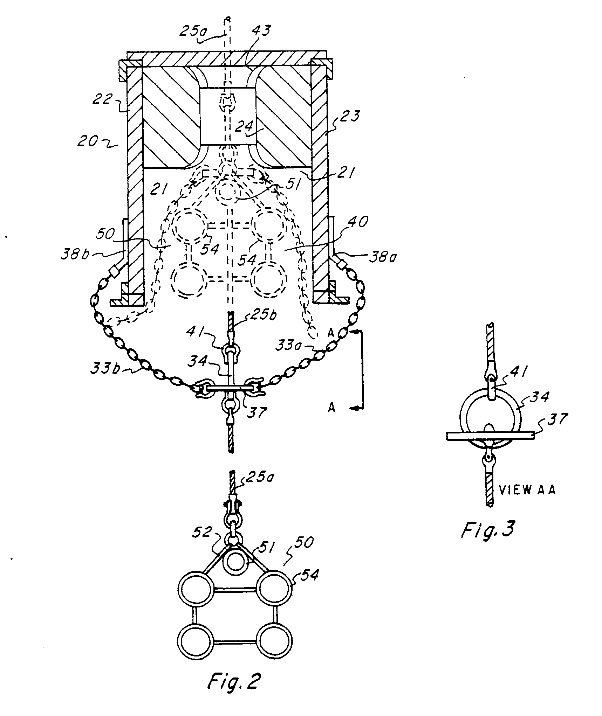

Paravane 20 is made up of buoyant bridge 21 to which are attached right and left wings 22 and 23. This configuration provides a side force of about 1.5 times that of a single wing paravane that is twice the length of the bi-planar pontoon paravane of this invention. In this preferred embodiment, the bi-planar pontoon paravane is approximately thirty feet long. A mast socket 31 receives an aluminum mast (not shown) having a target covered with reflective tape to be used with a laser range-finder to locate the paravane. Chains 33a and 35a are supported by air-gun support plates 38a and 39a, respectively. Chains 33b and 35b are supported on the right wing 22 by air-gun support plates 38b (see Figure 2) and 39b (not shown). Ring 34 is connected to cable 25b and ring 37 is connected to cables 33a and 33b as shown in Figures 2 and 3. An identical arrangement is provided for cable 27b. Ring 34 is connected through bracket 41 to the end of cable 25b. The lengths of cables 25a and 25b are selected so that rings 34 and 37 engage each other when the seismic source array 50 is at its desired depths. Cables 25b and 27b pass through apertures 24 and 26, respectively. For placement into the water and removal from the water, cables 25b and 27b are connected to a boom that is located aboard the towing vessel. The boom is not part of this invention and the vessel could be provided with a "cherry picker" or the like to move the assembly in and out of the water.

In Figure 1, the seismic source array 50 is shown being made up of air-gun support 51 with linking supports 52 and 53 supporting air-guns 54. Only one air-gun is so numbered, but it should be understood that the air-guns are all configured in generally the same manner with varying numbers as desired. In this preferred embodiment, 17 air-guns are supported by paravane 20. The size of the air-gun and the engineering design, of course, dictate the number to be used.

Figure 2 is a cross section taken through Figure 1 where indicated and illustrates the seismic source array 50 shown extended into the water, and also within chamber 40 of paravane 20 in the retracted position, having been pulled upwardly by the boom connected to cables 25b and 27b. Obviously, as shown in the retracted position, continued lifting by the boom results in the seismic source array 50 being lifted, contacting chains 33a, 33b and 35a, 35b. This results in paravane 20 being lifted.

Figure 3 is a side view of the depth rings 34 and 37.

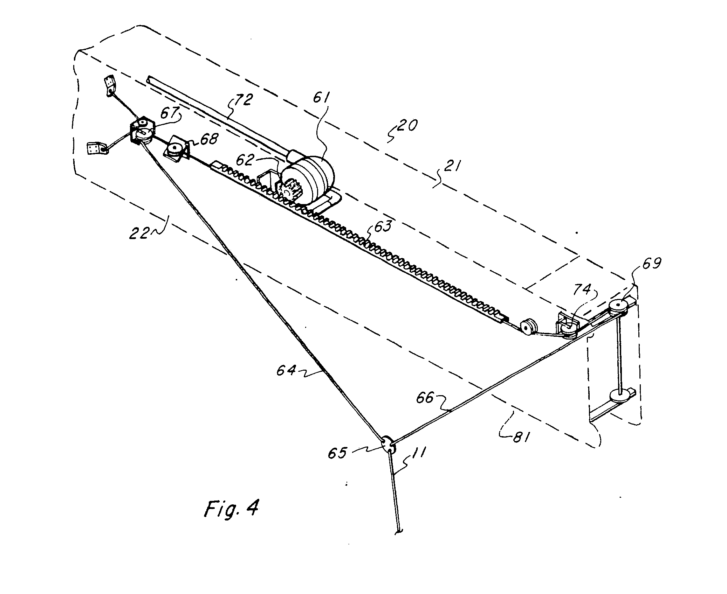

Figure 4 illustrates the adjustable bridle 81 attached, in this instance, to the right wing 22 and to the front of the paravane 20. The bridle is positioned at the center of pressure to avoid rotation of the paravane. In this preferred embodiment, hydraulic motor 61 drives pinion gear 62. The hydraulic fluid is supplied through line 72 which is returned to the towing vessel 80 with tow line 11. Motor 61, in this preferred embodiment, is manufactured by HPI Nichol, Model 123-X-HS-1 hydraulic wheel motor. The motor of course could be any suitable hydraulic motor. Alternatively, an air motor, an air cylinder or an hydraulic cylinder, for example, could be used. A valve aboard the vessel is used to control the direction and weight of hydraulic fluid flow to the motor. The particular valve selected for use in this application is a Racine hydraulic valve, Model ML-15. Any suitable valve, of course, may be employed.

Rack 63 is engaged by pinion gear 62. When rack 63 moves to the left, line 66 of the bridle is pulled to the right and line 64 is also pulled to the right causing the tow point 65 to move closer to the front of paravane 20. If the rack is moved in the other direction, the opposite result occurs. The tow point 65 is either brought closer to the front of paravane 20 or closer to the rear. Tow line 11 is connected to the towing vessel.

Line 64 rides on idler pulley 67, through apertures 68 for connection to rack 63. Line 66 rides on idler pulley 69 and through aperture 74 for connection to rack 63 which completes the loop.

Mode of operation

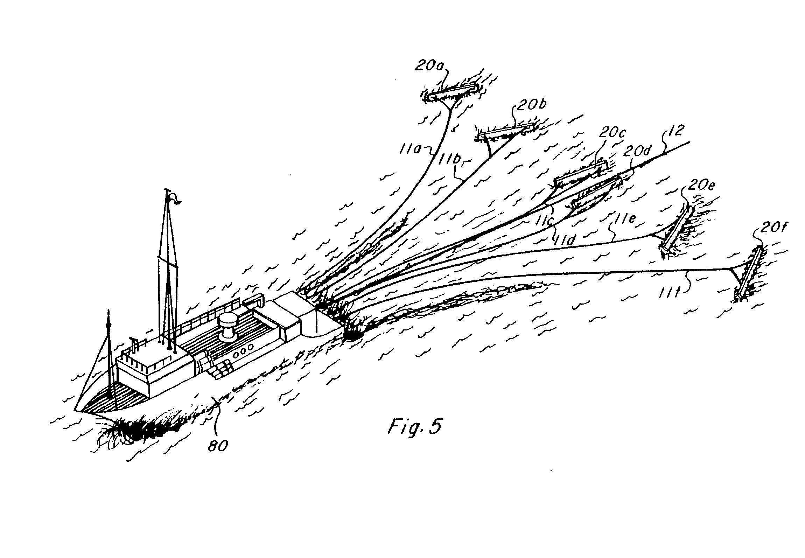

Please refer to all of the figures. Assume that bi-planar pontoon paravane 10 is aboard vessel 80 (Figure 5). Lines 25b and 27b are wound up on winches associated with the boom aboard vessel 80. The winches and boom are not part of the invention and are not shown. The seismic source array 50 is in position within housing 40 of paravane 20. The boom lifts the entire assembly 10 off the deck out over the water at which time the winches are turned to lower the assembly 10 into the water. The winches continue to turn, permitting the seismic source array 50 to descend into the water until ring 34 engages ring 37 (Figures 2 and 3). The rings (not shown) associated with chains 35a and 35b also are engaged. At that point, chains 33a, 33b, and 35a, 35b support the seismic source array 50. The boom is disconnected and the assembly 10 is towed. Figure 5 shows a plurality of paravanes 20a—20f being towed by vessel 80 via lines 11a—11f. In Figure 5, a seismic streamer 12 is shown in position. Streamer 12 has hydrophones attached for receiving seismic signals resulting from excitation of the seismic source arrays. It is contemplated that a single paravane may tow one or more other paravanes having seismic source arrays attached.

If it is desired to change the angle of attack of any of paravanes 20a—20f, the valve for the particular paravane aboard vessel 80 is activated to cause hydraulic fluid to flow in the desired direction and at the desired rate to move bridle 81 as described earlier. The paravane is thus moved further in or out in a direction orthogonal to the path of vessel 80, as desired.

When the survey has been completed, the paravane 20 is brought back to vessel 80 and lines 25b and 27b are again connected to be wound on the winches of the boom. As the winches wind the lines, array 50 moves up into compartment 40 of paravane 20. As the winches continue to wind, the entire assembly 10 is then lifted up and brought aboard by the boom which then lowers the assembly to a desired position on the deck of the vessel 80.

Those skilled in the art may make design changes to this invention, for instance in numbers of air-guns, using water guns instead of air-guns, the manner of supporting the air-guns, and the number of cables to pull the air-guns, all without departing from the scope of this invention which is defined by the appended claims.

## Claims

1. A bi-planar pontoon paravane (20) for towing by a marine vessel (80) and for controlling the depth and position of other towed devices (50) relative to the vessel, comprising:
   a buoyant bridge (21) having two long sides;
   a right wing (22) attached lengthwise of the paravane to one long side of the bridge, projected downwardly from the bridge into the water for providing side force; and
   a left wing (23) attached lengthwise of the paravane to the other long side of the bridge, parallel to the right wing, projected downwardly from the bridge into the water for providing side force in concert with the right wing.

2. A paravane according to Claim 1 further comprising a nose plane (28) positioned at the front of the paravane, between the right and left wings, angled to minimize diving of the paravane.

3. A paravane according to Claim 1 or 2 further comprising adjustable bridle means (81) connected to the paravane for towing, attached to the marine vessel, for adjusting the angle of attack of the paravane.

4. A paravane according to Claim 3 further comprising motor means (61) connected to adjust the adjustable bridle means.

5. A paravane according to Claim 4 wherein the motive means comprises a hydraulic motor (61) mounted in the paravane, gear means (62, 63) driven by the motor and connected at each end to the adjustable bridle means (81) to adjust the length of the bridle means from each end for adjusting the angle of attack of the paravane.

6. A paravane according to Claim 5 wherein the gear means comprises a pinion gear (62) driven by the hydraulic motor (61), a rack (63), positioned longitudinally of the length of the paravane, and at least one pulley (67, 74) positioned at each end of the rack for permitting movement of the adjustable bridle (81) when the rack moves in either direction.

7. A paravane according to Claim 5 or 6 wherein the hydraulic motor (61) is actuated by operation of an hydraulic valve.

8. A paravane system including a paravane according to any preceding claim wherein the marine vessel is equipped with a lifting mechanism and the other towed devices comprise a seismic source array selectively attachable to the lifting mechanism the system further comprising:
   means (33a, 33b, 34, 35a, 35b, 37) for suspending the seismic source array a desired distance below the paravane; and the paravane having
   housing means (40) located beneath the bridge and between the right and left wings for receiving the seismic source array when the lifting mechanism is attached and activated to lift the seismic source array.

9. A system according to Claim 8 wherein the seismic source array comprises a plurality of airguns (54) and airgun support means (25a, 25b, 27a, 27b, 51) for positioning the airguns.

10. A system according to Claim 9 wherein the airgun support means is selectively attachable to the lifting mechanism so that when the lifting mechanism is attached and activated, the airgun support means (51) contacts the underside of the buoyant bridge (21) between the right and left wings (22, 23) and thereby causes the bi-planar pontoon paravane to be lifted along with the seismic source array.

## Patentansprüche

1. Mittels eines Schiffs zu schleppendes Doppelflächen-Ottergerät (20) zum Kontrollieren der Tiefe und der Lage weiterer geschleppter Geräte (50) bezüglich des Schiffs, mit einer Schwimmbrücke (21) mit zwei Längsseiten, einem rechten Flügel (22), der in Längsrichtung zum Ottergerät an einer Längsseite der Brücke befestigt ist und von der Brücke aus nach unten zur Erzeugung einer Seitenkraft in das Wasser ragt, und einen linken Flügel (23), der in Längsrichtung des Ottergeräts an der anderen Längsseite der Brücke parallel zu dem rechten Flügel befestigt ist und zur Erzeugung einer Seitenkraft in Zusammenwirkung mit dem rechten Flügel von der Brücke aus nach unten in das Wasser ragt.

2. Ottergerät nach Anspruch 1, mit einer vorne am Ottergerät angebrachten Bugfläche (28) zwischen dem rechten und den linken Flügel, die so abgewinkelt ist, daß das Abtauchen des Ottergerätes auf ein Minimum herabgesetzt wird.

3. Ottergerät nach Anspruch 1 oder 2, mit einstellbaren Zugmitteln (81), die zum Schleppen mit dem Ottergerät verbunden und am Schiff befestigt sind, damit der Angriffswinkel des Ottergeräts einstellbar ist.

4. Ottergerät nach Anspruch 3, mit Motormitteln (61), die zum Einstellen der einstellbaren Zugmittel angeschlossen sind.

5. Ottergerät nach Anspruch 4, dadurch gekennzeichnet, daß die Motormittel einen im Ottergerät angebrachten Hydraulikmotor (61) und von dem Motor angetriebene Getriebemittel (62, 63) enthalten, die an jedem Ende mit den einstellbaren Zugmitteln (81) verbunden sind, so daß die Länge der Zugmittel von jedem Ende aus zum Einstellen des Angriffswinkels des Ottergeräts eingestellt werden kann.

6. Ottergerät nach Anspruch 5, bei welchem die Getriebemittel ein von dem Hydraulikmotor (61) angetriebenes Ritzel (62), eine in Längsrichtung zur Länge des Ottergeräts angeordnete Zahnstange (63) und wenigstens eine Rolle (67, 74) an jedem Ende der Zahnstange enthalten, damit eine Bewegung der einstellbaren Zugmittel (81) ermöglicht wird, wenn sich die Zahnstange in jeder Richtung bewegt.

7. Ottergerät nach Anspruch 5 oder 6, bei welchem der Hydraulikmotor (61) durch Betätigen eines Hydraulikventils betätigt wird.

8. Ottersystem mit einem Ottergerät gemäß einem der vorhergehenden Ansprüche, bei welchem ein Schiff mit einem Hebemechanismus ausgestattet ist und die weiteren geschleppten Geräte eine Gruppe seismischer Wellen umfaßt, die wahlweise an dem Hubmechanismus befestigbar ist, wobei das System ferner folgendes enthält: Mittel (33a, 33b, 34, 35a, 35b, 37) zum Aufhängen der Gruppe seismischer Quellen in einem gewünschten Abstand unterhalb des Ottergeräts, wobei das Ottergerät ein Gehäuse (40) aufweist, das unterhalb der Brücke zwischen dem rechten und dem linken Flügel angebracht ist und die Gruppe seismischer Quellen aufnimmt, wenn der Hubmechanismus befestigt ist und zum Anheben der Gruppe seismischer Quellen aktiviert ist.

9. System nach Anspruch 8, bei welchem die Gruppe seismischer Quellen mehrere Druckluftkanonen (54) und Druckluftkanonen-Trägermittel (25a, 25b, 27a, 27b, 51) zum Positionieren der Druckluftkanonen umfaßt.

10. System nach Anspruch 9, bei welchem die Trägermittel für die Durckluftkanonen wahlweise an den Hubmechanismus befestigbar sind, so daß dann, wenn der Hubmechanismus befestigt und aktiviert ist, die Trägermittel (51) die Unterseite der Schwimmbrücke (21) zwischen dem rechten und dem linken Flügel (22, 23) berühren, wodurch bewirkt wird, daß das Doppelflächen-Ottergerät zusammen mit der Gruppe seismischer Quellen angehoben wird.

## Revendications

1. Paravane biplan à ponton (20) destiné à être remorqué par un navire (80) et à régler la profondeur et la position d'autres dispositifs remorqués (50) par rapport au navire, comprenant:
un pont flottant (21) ayant deux grands côtés,
une aile droite (22) fixée suivant la longueur du paravane à un grand côté du pont et dépassant sous le pont dans l'eau afin qu'elle exerce une force latérale, et
une aile gauche (23) fixée suivant la longueur du paravane à l'autre grand côté du pont, parallèlement à l'aile droite et dépassant au-dessous du pont dans l'eau afin qu'elle exerce une force latérale en coopération avec l'aile droite.

2. Paravane selon la revendication 1, comprenant en outre un plan avant (28) disposé à l'avant du paravane, entre les ailes droite et gauche, et incliné afin qu'il réduise au minimum la longée du paravane.

3. Paravane selon l'une des revendications 1 et 2, comprenant en outre un dispositif à bride réglable (81) raccordé au paravane afin qu'il soit remorqué, fixé au navire et destiné à régler l'angle d'attaque du paravane.

4. Paravane selon la revendication 3, comprenant en outre un dispositif à moteur (61) raccordé de manière qu'il règle le dispositif à bride réglable.

5. Paravane selon la revendication 4, dans lequel le dispositif moteur comporte un moteur hydraulique (61) monté dans le paravane, et un dispositif à engrenage (62, 63) entraîné par le moteur et raccordé aux deux extrémités au dispositif à bride réglable (81) afin qu'il règle la longueur du dispositif à bride par les deux extrémités et règle l'angle d'attaque du paravane.

6. Paravane selon la revendication 5, dans lequel le dispositif à engrenage comporte un pignon (62) entraîné par le moteur électrique (61), une crémaillère (63) disposée suivant la longueur du paravane, et au moins une poulie (67, 74) placée à chaque extrémité de la crémaillère et destinée à permettre le déplacement de la bride réglable (81) lorsque la crémaillère se déplace dans un sens ou dans l'autre.

7. Paravane selon l'une des revendications 5 et 6, dans lequel le moteur hydraulique (61) est commandé par manoeuvre d'un distributeur hydraulique.

8. Ensemble à paravane comprenant un paravane selon l'une quelconque des revendications précédentes, dans lequel le navire est équipé d'un mécanisme de levage et les autres dispositifs remorqués comprennent un ensemble de sources sismiques qui peut être fixée sélectivement au mécanisme de levage, l'ensemble comprenant en outre:

un dispositif (33a, 33b, 34, 35a, 35b, 37) destiné à suspendre l'ensemble de sources sismiques à une distance voulue au-dessous du paravane, et le paravane comporte

un dispositif (40) formant boîtier, placé sous le pont et entre les ailes droite et gauche et destiné à loger l'ensemble de sources sismiques lorsque le dispositif de levage est fixé et est commandé afin qu'il lève l'ensemble de sources sismiques.

9. Ensemble selon la revendication 8, dans lequel l'ensemble de sources sismiques comporte plusieurs canons pneumatiques (54) et un dispositif de support (25a, 25b, 27a, 27b, 51) destiné à positionner les canons pneumatiques.

10. Ensemble selon la revendication 9, dans lequel le dispositif de support des canons pneumatiques peut être fixé sélectivement au mécanisme de levage afin que, lorsque le mécanisme de levage est fixé et commandé, le dispositif de support (51) des canons pneumatiques soit au contact de la face inférieure du pont flottant (21) entre les ailes droite et gauche (22, 23) et provoque ainsi le soulèvement du paravane biplan à ponton avec l'ensemble de sources sismiques.

Fig. 1

0 168 959

Fig.2

Fig.3

VIEW A A

Fig. 4

Fig. 5